(19) Europäisches Patentamt
European Patent Office
Office européen des brevets

(11) **EP 3 922 949 A1**

(12) **EUROPEAN PATENT APPLICATION**
published in accordance with Art. 153(4) EPC

(43) Date of publication:
**15.12.2021 Bulletin 2021/50**

(51) Int Cl.:
***G01C 21/34*** *(2006.01)*     ***G01C 21/00*** *(2006.01)*

(21) Application number: **19942652.9**

(22) Date of filing: **18.12.2019**

(86) International application number:
**PCT/CN2019/126414**

(87) International publication number:
**WO 2021/036107 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.08.2019 CN 201910797675**

(71) Applicant: **Guangdong Xiaopeng Motors Technology Co., Ltd.**
**Guangzhou, Guangdong 510000 (CN)**

(72) Inventors:
• **CHEN, Shengjun**
  **Guangzhou, Guangdong 510555 (CN)**
• **LAI, Jianming**
  **Guangzhou, Guangdong 510555 (CN)**
• **XU, Kuangzheng**
  **Guangzhou, Guangdong 510555 (CN)**
• **SU, Jingren**
  **Guangzhou, Guangdong 510555 (CN)**
• **YAN, Fang**
  **Guangzhou, Guangdong 510555 (CN)**

(74) Representative: **DREISS Patentanwälte PartG mbB**
**Friedrichstraße 6**
**70174 Stuttgart (DE)**

(54) **PATH PLANNING METHOD AND PATH PLANNING SYSTEM**

(57)     A path planning method and a path planning system are disclosed, which are configured to select, by determining a distance between a current pose (A) and a target pose (B) of a vehicle, a corresponding re-planning connection mode for re-planning a parking path and eliminating an error, thereby improving an accuracy of parallel parking of the vehicle. The path planning method includes: obtaining a starting point pose (A) and a target pose (B); determining a distance between the starting point pose (A) and the target pose (B); moving, in response to the distance being greater than a first predetermined threshold, the target pose (B) towards the starting point pose (A) with a first turning radius (R) to obtain a first current pose (M), the first turning radius (R) being greater than or equal to a minimum turning radius (Rmin) of a vehicle; and connecting the first current pose (M) and the starting point pose (A) by using a target connection method, and obtaining a first planned path in response to the connecting being successful. The first planned path includes a path between the starting point pose (A) and the first current pose (M) and a path between the first current pose (M) and the target pose (B).

Obtaining a starting point pose and a target pose

Determining a distance between the starting point pose and the target pose

Moving, in response to the distance being greater than a first predetermined threshold, the target pose towards the starting point pose with a first turning radius to obtain a first current pose

Connecting, in response to the distance being smaller than or equal to the first predetermined threshold, the starting point pose and the target pose by using the target connection method, and obtaining a second planned path in response to the connecting being successful

Connecting the first current pose and the starting point pose by using a target connection method, and obtaining a first planned path in response to the connecting being successful

In response to the connecting being failed, moving the starting point pose towards the target pose in a straight line for a predetermined length to obtain a second current pose

Connecting the second current pose and the target pose by using the target connection method, and determining a third planned path in response to the connecting being successful

In response to the connecting being failed, moving the starting point pose towards the target pose with a second turning radius to obtain a third current pose

Calculating a tracking error between the third current pose and the target pose

Connecting, in response to the tracking error being smaller than a second predetermined threshold, the third current pose and the target pose by using a straight line to determine a fourth planned path

FIG. 2

EP 3 922 949 A1

**Description**

**TECHNICAL FIELD**

The present disclosure relates to the field of intelligent vehicle technologies, and more particularly, to a path planning method and a path planning system.

**BACKGROUND**

As a convenient and fast transportation, vehicles have become an important part of people's lives and work. As the number of vehicles has increased year by year, a limited urban space has become increasingly crowded, and an average parking space allocated to each vehicle has also been shrinking, such that difficulties in parking vehicles are gradually emerging in people's lives. People's requirements for convenience and safety of vehicles have stimulated more and more vehicle manufacturers, scientific research institutions and universities to conduct research on parking systems.

**SUMMARY**

An embodiment of the present disclosure provides a path planning method and a path planning system, which are configured to select, by determining a distance between a current pose and a target pose of a vehicle, a corresponding re-planning connection mode for re-planning a parking path and eliminating an error, thereby improving an accuracy of parallel parking of the vehicle.

In view of this, in a first aspect of the present disclosure, the path planning method and the path planning system are provided. The path planning method can include: obtaining a starting point pose and a target pose; determining a distance between the starting point pose and the target pose; moving, in response to the distance being greater than a first predetermined threshold, the target pose towards the starting point pose with a first turning radius to obtain a first current pose, the first turning radius being greater than or equal to a minimum turning radius of a vehicle; and connecting the first current pose and the starting point pose by using a target connection method, and obtaining a first planned path in response to the connecting being successful. The target connection method includes at least one of a straight line connection method and an arc connection method, and the first planned path includes a path between the starting point pose and the first current pose and a path between the first current pose and the target pose.

In at least one embodiment of the present disclosure, the method further includes connecting, in response to the distance being smaller than or equal to the first predetermined threshold, the starting point pose and the target pose by using the target connection method, and obtaining a second planned path in response to the connecting being successful.

In at least one embodiment of the present disclosure, the method further includes, in response to said connecting the starting point pose and the target pose by using the target connection method being failed: moving the starting point pose towards the target pose in a straight line for a predetermined length to obtain a second current pose; and connecting the second current pose and the target pose by using the target connection method, and determining a third planned path in response to the connecting being successful. The third planned path includes a path between the starting point pose and the second current pose and a path between the second current pose and the target pose.

In at least one embodiment of the present disclosure, the method further includes, in response to said connecting the starting point pose and the target pose by using the target connection method being failed, or in response to said connecting the second current pose and the target pose by using the target connection method being failed: moving the starting point pose towards the target pose with a second turning radius to obtain a third current pose, the second turning radius being greater than or equal to the minimum turning radius of the vehicle, and the third current pose being parallel to the target pose; calculating a tracking error between the third current pose and the target pose; and connecting, in response to the tracking error being smaller than a second predetermined threshold, the third current pose and the target pose by using a straight line to determine a fourth planned path. The fourth planned path includes a path between the starting point pose and the third current pose and a path between the third current pose and the target pose.

In a second aspect of the present disclosure, the path planning system is provided. The path planning system can include: an obtaining module configured to obtain a starting point pose and a target pose; and a processing module configured to: determine a distance between the starting point pose and the target pose; move, in response to the distance being greater than a first predetermined threshold, the target pose towards the starting point pose with a first turning radius to obtain a first current pose, the first turning radius being greater than or equal to a minimum turning radius of a vehicle; and connect the first current pose and the starting point pose by using a target connection method, and obtain a first planned path in response to the connecting being successful. The target connection method includes at least one of a straight line connection method and an arc connection method, and the first planned path includes a path between the starting point pose and the first current pose and a path between the first current pose and the target pose.

In at least one embodiment of the present disclosure, the processing module is further configured to connect, in response to the distance being smaller than or equal to the first predetermined threshold, the starting point pose and the target pose by using the target connection method, and obtain a second planned path in response to the connecting being successful.

In at least one embodiment of the present disclosure, the processing module is further configured to: move the starting point pose towards the target pose in a straight line for a predetermined length to obtain a second current pose; connect the second current pose and the target pose by using the target connection method; and determine a third planned path in response to the connecting being successful. The third planned path includes a path between the starting point pose and the second current pose and a path between the second current pose and the target pose.

In at least one embodiment of the present disclosure, the processing module is further configured to: move the starting point pose towards the target pose with a second turning radius to obtain a third current pose, the second turning radius being greater than or equal to the minimum turning radius of the vehicle, and the third current pose being parallel to the target pose; calculate a tracking error between the third current pose and the target pose; and connect, in response to the tracking error being smaller than a second predetermined threshold, the third current pose and the target pose by using a straight line to determine a fourth planned path. The fourth planned path includes a path between the starting point pose and the third current pose and a path between the third current pose and the target pose.

In a third aspect of the present disclosure, a vehicle is provided. The vehicle can include the path planning system as described in any optional implementation of the first aspect and the second aspect.

In a fourth aspect of the present disclosure, a computer-readable storage medium is provided. The computer-readable storage medium stores a computer program. The computer program causes a computer to perform the path planning method according to an embodiment in the first aspect of the present disclosure.

It can be seen from the above technical solution that an embodiment of the present disclosure has the following advantages.

According to an embodiment of the present disclosure, the starting point pose and the target pose can be obtained. The distance between the starting point pose and the target pose can be determined. The target pose can be moved, in response to the distance being greater than the first predetermined threshold, towards the starting point pose with the first turning radius to obtain the first current pose. The first turning radius is greater than or equal to the minimum turning radius of the vehicle. The first current pose and the starting point pose are connected by using the target connection method. The first planned path is obtained in response to the first current pose and the starting point pose being successfully connected. The target connection method includes at least one of the straight line connection method and the arc connection method. The first planned path includes the path between the starting point pose and the first current pose and the path between the first current pose and the target pose. A corresponding re-planning connection mode is selected, by determining the distance between the current pose and the target pose of the vehicle, for re-planning the parking path and eliminating the error, thereby improving the accuracy of parallel parking of the vehicle.

## BRIEF DESCRIPTION OF DRAWINGS

In order to clearly explain technical solutions of embodiments of the present disclosure, drawings used in the embodiments and the related art are briefly described below. Obviously, the drawings as described below are merely some embodiments of the present disclosure. Other drawings can be obtained based on these drawings.

FIG. 1A is a schematic diagram showing projections of a starting point pose and a target pose on an axis y according to an embodiment of the present disclosure.

FIG. 1B is a first schematic diagram showing connecting a starting point pose and a target pose by using a target connection method to obtain a first planned path according to an embodiment of the present disclosure.

FIG. 1C is a second schematic diagram showing connecting a starting point pose and a target pose by using a target connection method to obtain a first planned path according to an embodiment of the present disclosure.

FIG. 1D is a third schematic diagram showing connecting a starting point pose and a target pose by using a target connection method to obtain a first planned path according to an embodiment of the present disclosure.

FIG. 1E is a fourth schematic diagram showing connecting a starting point pose and a target pose by using a target connection method to obtain a first planned path according to an embodiment of the present disclosure.

FIG. 2 is a flowchart illustrating a path planning method according to an embodiment of the present disclosure.

FIG. 3A is a schematic diagram showing obtaining a second planned path according to an embodiment of the present disclosure.

FIG. 3B is a schematic diagram showing obtaining a third planned path according to an embodiment of the present disclosure.

FIG. 3C is a schematic diagram showing obtaining a fourth planned path according to an embodiment of the present disclosure.
FIG. 4 is a block diagram showing a path planning system according to an embodiment of the present disclosure.
FIG. 5 is a block diagram showing a path planning system according to another embodiment of the present disclosure.

## DESCRIPTION OF EMBODIMENTS

An embodiment of the present disclosure provides a path planning method and a path planning system, which are configured to select, by determining a distance between a current pose and a target pose of a vehicle, a corresponding re-planning connection mode for re-planning a parking path and eliminating an error, thereby improving an accuracy of parallel parking of the vehicle.

In order to enable those skilled in the art to understand the technical solutions of the present disclosure, technical solutions in the embodiments of the present disclosure will be described below with reference to the accompanying drawings in the embodiments of the present disclosure. Obviously, the embodiments described here are only part of the embodiments of the present disclosure and are not all embodiments of the present disclosure. Any embodiment based on the present disclosure is within the scope of the present disclosure.

An embodiment of the present disclosure can be applied to scenarios such as normal driving, reverse driving, or parallel parking, etc., of a vehicle, and this embodiment of the present disclosure is not limited to any of these examples.

A brief description of a straight line-arc connection method involved in an embodiment of the present disclosure will be made below. A target connection method is at least one of the straight line connection method and the arc connection method. Description is made below.

Suppose that a starting point pose is represented by point A ($x_A$, $y_A$, $\theta_A$), and the target pose is represented by point B ($x_B$, $y_B$, $\theta_B$). A simple straight line-arc connection method refers to finding a complete path from point A to point B formed by a straight line or an arc. The path is tangent to point A at a starting point and tangent to point B at an end point.

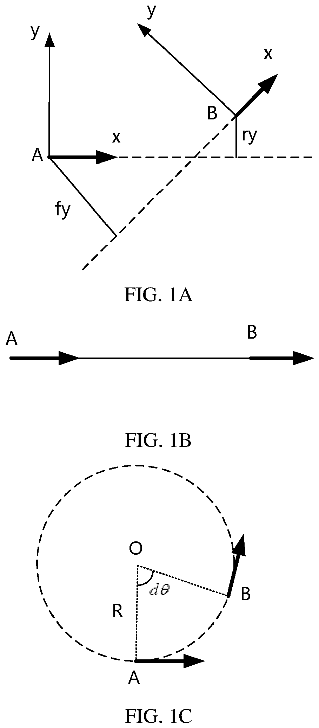

FIG. 1A is a schematic diagram showing projections of a starting point pose and a target pose on an axis y according to an embodiment of the present disclosure. As illustrated in FIG. 1A, a direction of the current pose of the vehicle is determined as an axis x, and the axis y is obtained based on the right-hand rule. An x-axis perpendicular line of point A and an x-axis perpendicular line of point B are drawn respectively by crossing point A and point B, thereby obtaining projections of point A and point B in a direction y as ry and fy (signed).

$$ry = (y_B - y_A) * \cos(\theta_A) - (x_B - x_A) * \sin(\theta_A)$$

$$fy = (y_A - y_B) * \cos(\theta_B) - (x_A - x_B) * \sin(\theta_B)$$

(1) FIG. 1B is a first schematic diagram showing connecting a starting point pose and a target pose by using a target connection method to obtain a first planned path according to an embodiment of the present disclosure. As illustrated in FIG. 1B, if point A and point B are collinear, then point A and point B are connected. The first planned path is a straight line segment formed by AB.

(2) FIG. 1C is a second schematic diagram showing connecting a starting point pose and a target pose by using a target connection method to obtain a first planned path according to an embodiment of the present disclosure.

As illustrated in FIG. 1C, if point A and point B are not collinear, it is determined whether an arc can be found to connect point A and point B. As illustrated in FIG. 1C, a specific operation is to draw perpendicular lines of point A and point B respectively, and make the perpendicular lines intersect at point O. If OA ≠ OB, there is no solution, and then move to (3). If OA=OB and an arc radius R≥Rmin (a minimum turning radius of the vehicle), a single-arc path AB is found, i.e., the first planned path is the single-arc path AB; otherwise, there is no such arc, then move to (3).

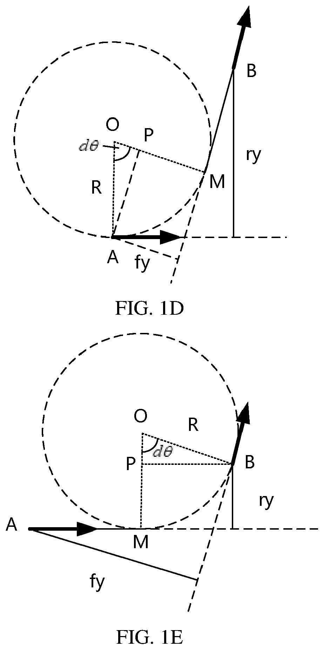

(3) FIG. 1D is a third schematic diagram showing connecting a starting point pose and a target pose by using a target connection method to obtain a first planned path according to an embodiment of the present disclosure.

As illustrated in FIG. 1D, suppose that an arc is tangent to point A and a center of the circle is point O. An auxiliary line parallel to point B on the axis x is made by crossing point A, thereby obtaining point P. Assuming that the arc radius is R, then OP =R-|fy|, and a central angle is $d\theta = |\theta_A - \theta_B|$. In $\triangle OPA$, it can be obtained that $\cos(d\theta) = OP / OA = (R-|fy|) / R$ by the law of cosines. The arc radius can be solved as:

$$R = |fy| / (1 - \cos(d\theta)).$$

If R≥Rmin (the minimum turning radius of the vehicle), an arc-straight line path from A to B is found. That is, the first planned path includes an arc path AM and a straight line path MB.

(4) FIG. 1E is a fourth schematic diagram showing connecting a starting point pose and a target pose by using a target connection method to obtain a first planned path according to an embodiment of the present disclosure.

As illustrated in FIG. IE, it is assumed that the arc is tangent to point B and a center of the circle is point O. An auxiliary line parallel to point A on the axis x is made by crossing point B, thereby obtaining point P. Assuming that the arc radius is R, then OP=R-|ry|, and the central angle is $d\theta = |B_A - \theta_B|$. In $\triangle OPB$, it can be obtained that $\cos(d\theta) = OP/OB = (R- |ry|)/R$ by the law of cosines. The arc radius can be solved as:

$$R = |ry|/(1 - \cos(d\theta)) .$$

If R≥Rmin, then a straight line-arc path from point A to point B is found. That is, the first planned path includes a straight line path AM and an arc path MB.

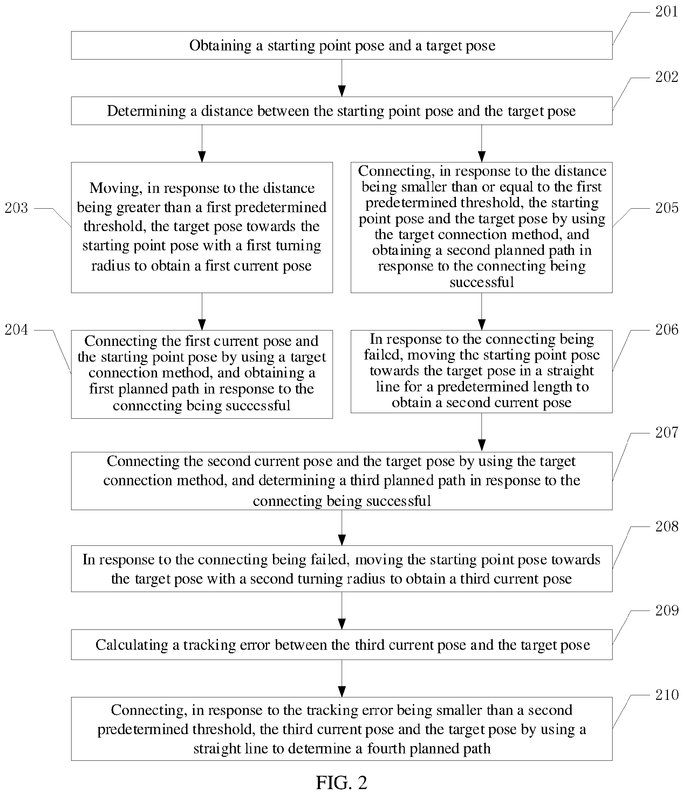

The technical solution of the present disclosure will be further described below by way of embodiments. FIG. 2 is a flowchart illustrating a path planning method according to an embodiment of the present disclosure. The path planning method includes the following steps.

At block 201, a starting point pose and a target pose are obtained.

In an embodiment of the present disclosure, a manner that the path planning system obtains the starting point pose and the target pose can be that a user inputs the starting point pose and the target pose, or the path planning system obtains the starting point pose and the target pose. It can be understood that the starting point pose is the current pose of the vehicle.

The vehicle can be provided with a sensor such as an Inertial Measurement Unit (IMU), a wheel pulse counter, etc., which can be used as a positioning module (such as a body odometer) of the vehicle to obtain the current pose of the vehicle.

At block 202, a distance between the starting point pose and the target pose is determined.

The path planning system determines the distance between the starting point pose and the target pose. Generally, a pose can include information such as a position, a heading angle, and a vehicle speed. The starting point pose includes a starting point position, and the target pose includes a target position. The distance between the starting point pose and the target pose can be calculated based on the starting point position and the target pose.

At block 203, in response to the distance being greater than a first predetermined threshold, the target pose is moved towards the starting point pose with a first turning radius to obtain a first current pose. The first turning radius is greater than or equal to a minimum turning radius of the vehicle.

If the distance is greater than the first predetermined threshold, the path planning system moves the target pose towards the starting point pose with the first turning radius to obtain the first current pose. The first turning radius is greater than or equal to the minimum turning radius of the vehicle.

The minimum turning radius of the vehicle is determined by a steering mechanism of the vehicle. Each vehicle has a unique characteristic, i.e., a radius when a steering wheel is turned to the greatest extent.

At block 204, the first current pose and the starting point pose are connected by using a target connection method, and a first planned path is obtained in response to the first current pose and the starting point pose being successfully connected. The target connection method includes at least one of a straight line connection method and an arc connection method. The first planned path includes a path between the starting point pose and the first current pose and a path between the first current pose and the target pose.

Exemplarily, suppose that the starting point pose that needs to be re-planned is stpos, and the target pose is finpos. If the current pose is far from the target pose, a pull-out operation (front and back reverse driving) starts from the target pose finpos. Each time of reverse driving obtains an intermediate pose midpos1. It is tried to make the straight line-arc connection from midpos1 to stpos. If the straight line-arc connection is successful, a complete trajectory is reversed and ended, and the first planned path is obtained. The first planned path includes the path between the starting point pose and the first current pose and the path between the first current pose and the target pose.

It should be noted that connecting the first current pose and the starting point pose by using the target connection method to obtain the path between the first current pose and the target pose can be referred to the above description of FIG. 1A to FIG. 1B, and details thereof will be omitted here.

At block 205, in response to the distance being smaller than or equal to the first predetermined threshold, the starting point pose and the target pose are connected by using the target connection method, and a second planned path is obtained in response to the starting point pose and the target pose being successfully connected.

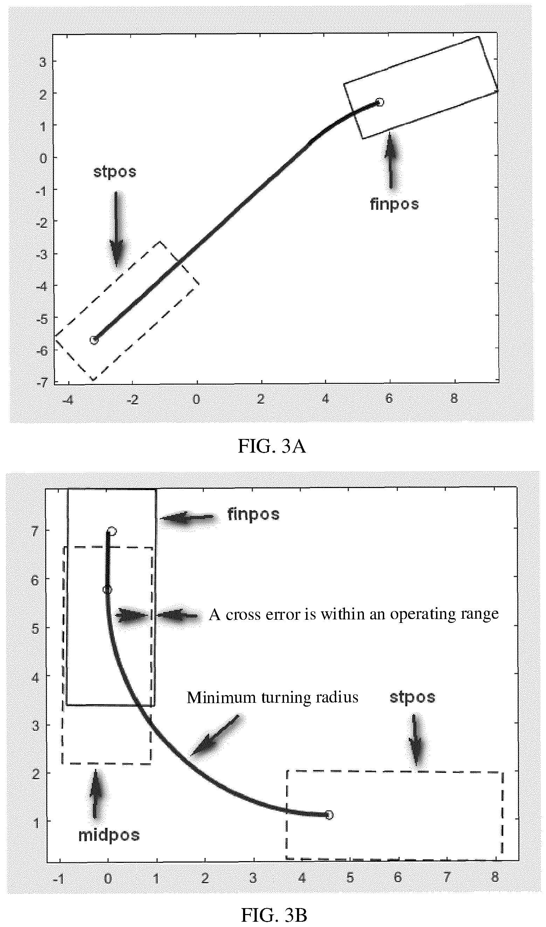

It can be understood that if the distance between the starting point pose and the target pose is smaller than or equal to the first predetermined threshold, i.e., the starting point pose is close to the target pose, a try of the straight line-arc connection is made from stpos to finpos. If the connection is successful, the second planned path is obtained. The second planned path includes a path between the starting point pose and the target pose. FIG. 3A is a schematic diagram showing obtaining a second planned path according to an embodiment of the present disclosure. As illustrated in FIG. 3A, the target connection method is at least one of the straight line connection method and the arc connection method.

It should be noted that if connecting the starting point pose and the target pose by using the target connection method fails, step 206 and step 207 can be executed, or steps 208-210 can be executed.

At block 206, the starting point pose is moved towards the target pose in a straight line for a predetermined length to obtain a second current pose.

The path planning system moves the starting point pose towards the target pose in a straight line for the predetermined length to obtain the second current pose. That is, the starting point pose stpos is moved towards the target pose for a certain length to obtain the second current pose midpos2.

At block 207, the second current pose and the target pose are connected by using the target connection method, and a third planned path is determined in response to the second current pose and the target pose being successfully connected. The third planned path includes a path between the starting point pose and the second current pose and a path between the second current pose and the target pose.

The path planning system connects the second current pose and the target pose by using the target connection method. The third planned path is determined in response to the second current pose and the target pose being successfully connected. Exemplarily, a try of a simple straight line-arc connection is made from the second current pose midpos2 to stpos. If the simple straight line-arc connection is successful, the try ends, and the third planned path is obtained. FIG. 3B is a schematic diagram showing obtaining a third planned path according to an embodiment of the present disclosure.

It should be noted that if connecting the second current pose and the target pose by using the target connection method fails, step 208 to step 210 are executed.

At block 208, the starting point pose is moved towards the target pose with a second turning radius to obtain a third current pose. The second turning radius is greater than or equal to the minimum turning radius of the vehicle. The third current pose is parallel to the target pose.

The path planning system moves the starting point pose towards the target pose with the second turning radius to obtain the third current pose. The second turning radius is greater than or equal to the minimum turning radius of the vehicle. The third current pose is parallel to the target pose.

The minimum turning radius of the vehicle is determined by the steering mechanism of the vehicle. Each vehicle has a unique characteristic, i.e., the radius when the steering wheel is turned to the greatest extent.

Exemplarily, the starting point pose stpos is moved towards the target pose finpos with the second turning radius until the starting point pose stpos is parallel to the target pose, thereby obtaining a third current pose midpos3.

At block 209, a tracking error between the third current pose and the target pose is calculated.

The path planning system calculates the tracking error between the third current pose and the target pose. The tracking error can be the Cross Track Error (CTE) mentioned above, or a heading angle error of the vehicle.

Exemplarily, the tracking error is calculated in the following manner:

(1) The third current pose of the vehicle is $(x_r, y_r, \theta)$, and the target pose is $(x_{ref}, y_{ref}, \theta_{ref})$;
(2) The Cross Track Error (CTE) is calculated.

A tracking error vector:

$$\mathbf{d} = (x_r - x_{ref}, y_r - y_{ref}) \qquad \text{(Formula 1)}$$

A normal vector corresponding to $(x_{ref}, y_{ref})$ is

$$\mathbf{n} = (\sin\theta_{ref}, -\cos\theta_{ref})$$

$$\text{(Formula 2)}$$

The CTE is:

$$\text{CTE} = \mathbf{d} \cdot \mathbf{n} = (x_r - x_{ref})sin\theta_{ref} - (y_r - y_{ref})cos\theta_{ref} \quad \text{(Formula 3)}$$

(3) The heading angle error of the vehicle is calculated by:

**[0078]** (3) The heading angle error of the vehicle is calculated by: $\theta_e = \theta - \theta_{ref}$

(Formula 4)

At block 210, in response to the tracking error being smaller than a second predetermined threshold, the third current pose and the target pose are connected by using a straight line to determine a fourth planned path. The fourth planned path includes a path between the starting point pose and the third current pose and a path between the third current pose and the target pose.

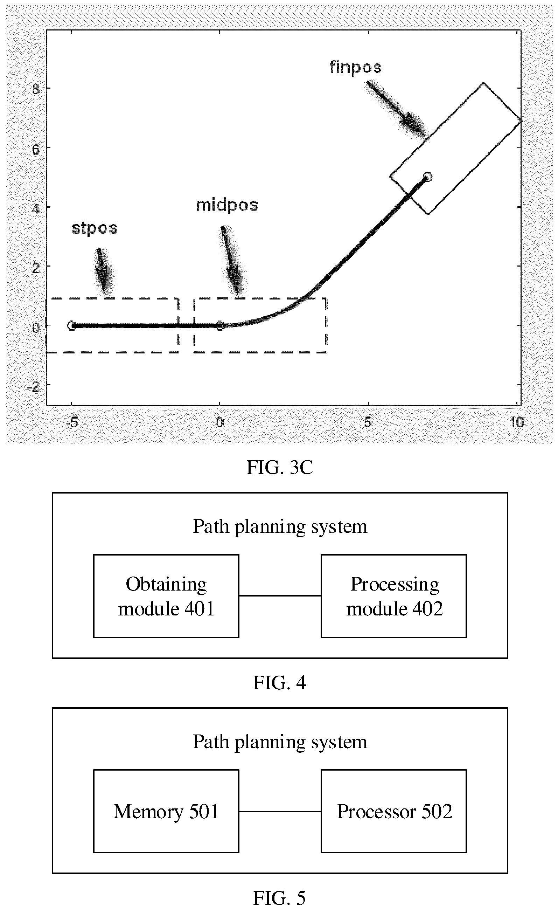

If the tracking error is smaller than the second predetermined threshold, the third current pose and the target pose can be connected by using the straight line. Therefore, the fourth planned path can include an arc path from the starting point pose to the third current pose and a straight line path from the third current pose to the target pose. That is, if a second tracking error between midpos3 and finpos is smaller than a fourth predetermined threshold, the planning is considered successful, and then a straight line from midpos3 to finpos is added to obtain a complete planning path. FIG. 3C is a schematic diagram showing obtaining a fourth planned path according to an embodiment of the present disclosure.

According to an embodiment of the present disclosure, the starting point pose and the target pose can be obtained. The distance between the starting point pose and the target pose can be determined. The target pose can be moved, in response to the distance being greater than the first predetermined threshold, towards the starting point pose with the first turning radius to obtain the first current pose. The first turning radius is greater than or equal to the minimum turning radius of the vehicle. The first current pose and the starting point pose are connected by using the target connection method. The first planned path is obtained in response to the first current pose and the starting point pose being successfully connected. The first planned path includes the path between the starting point pose and the first current pose and the path between the first current pose and the target pose. A corresponding re-planning connection mode is selected, by determining the distance between the current pose and the target pose of the vehicle, for re-planning the parking path and eliminating the error, thereby improving the accuracy of parallel parking of the vehicle.

FIG. 4 is a block diagram showing a path planning system according to an embodiment of the present disclosure.

The path planning system can include an obtaining module 401 and a processing module 402.

The obtaining module 401 is configured to obtain a starting point pose and a target pose.

The processing module 402 is configured to: determine a distance between the starting point pose and the target pose; move, in response to the distance being greater than a first predetermined threshold, the target pose towards the starting point pose with a first turning radius to obtain a first current pose, the first turning radius being greater than or equal to a minimum turning radius of a vehicle; and connect the first current pose and the starting point pose by using a target connection method, and obtain a first planned path in response to the connecting being successful. The target connection method includes at least one of a straight line connection method and an arc connection method, and the first planned path includes a path between the starting point pose and the first current pose and a path between the first current pose and the target pose.

In at least one embodiment, the processing module 402 is further configured to connect, in response to the distance being smaller than or equal to the first predetermined threshold, the starting point pose and the target pose by using the target connection method, and obtain a second planned path in response to the connecting being successful.

In at least one embodiment, the processing module 402 is further configured to: move the starting point pose towards the target pose in a straight line for a predetermined length to obtain a second current pose; connect the second current pose and the target pose by using the target connection method; and determine a third planned path in response to the connecting being successful. The third planned path includes a path between the starting point pose and the second current pose and a path between the second current pose and the target pose.

In at least one embodiment, the processing module 402 is further configured to: move the starting point pose towards the target pose with a second turning radius to obtain a third current pose, the second turning radius being greater than or equal to the minimum turning radius of the vehicle, and the third current pose being parallel to the target pose; calculate a tracking error between the third current pose and the target pose; and connect, in response to the tracking error being smaller than a second predetermined threshold, the third current pose and the target pose by using a straight line to determine a fourth planned path. The fourth planned path includes a path between the starting point pose and the third current pose and a path between the third current pose and the target pose.

In at least one embodiment of the present disclosure, a vehicle is further provided. The vehicle includes the path planning system as illustrated in FIG. 4.

FIG. 5 is a block diagram showing a path planning system according to another embodiment of the present disclosure. The path planning system can include a memory 501 having executable program codes stored thereon, and a processor 502 coupled to the memory 501.

The processor 502 invokes the executable program codes stored in the memory 501, and executes the following steps of: obtaining a starting point pose and a target pose; determining a distance between the starting point pose and the target pose; moving, in response to the distance being greater than a first predetermined threshold, the target pose towards the starting point pose with a first turning radius to obtain a first current pose, the first turning radius being greater than or equal to a minimum turning radius of a vehicle; and connecting the first current pose and the starting point pose by using a target connection method, and obtaining a first planned path in response to the connecting being successful. The target connection method includes at least one of a straight line connection method and an arc connection method, and the first planned path includes a path between the starting point pose and the first current pose and a path between the first current pose and the target pose.

In at least one embodiment of the present disclosure, the processor 502 invokes the executable program codes stored in the memory 501, and executes the following steps of: connecting, in response to the distance being smaller than or equal to the first predetermined threshold, the starting point pose and the target pose by using the target connection method, and obtaining a second planned path in response to the connecting being successful.

In at least one embodiment of the present disclosure, the processor 502 invokes the executable program codes stored in the memory 501, and executes the following steps of: moving the starting point pose towards the target pose in a straight line for a predetermined length to obtain a second current pose; and connecting the second current pose and the target pose by using the target connection method, and determining a third planned path in response to the connecting being successful. The third planned path includes a path between the starting point pose and the second current pose and a path between the second current pose and the target pose.

In at least one embodiment of the present disclosure, the processor 502 invokes the executable program codes stored in the memory 501, and executes the following steps of: moving the starting point pose towards the target pose with a second turning radius to obtain a third current pose, the second turning radius being greater than or equal to the minimum turning radius of the vehicle, and the third current pose is parallel to the target pose; calculating a tracking error between the third current pose and the target pose; and connecting, in response to the tracking error being smaller than a second predetermined threshold, the third current pose and the target pose by using a straight line to determine a fourth planned path. The fourth planned path includes a path between the starting point pose and the third current pose and a path between the third current pose and the target pose.

In the above embodiments, it is possible to implement the embodiments fully or partially by software, hardware, firmware or any other combination. When implemented by software, it is possible to implement the embodiments fully or partially in a form of computer program products.

The computer program product includes one or more computer instructions. When the computer program instructions are loaded and executed by the computer, procedures or functions according to embodiments of the present disclosure are fully or partially generated. The computer may be a general-purpose computer, a special-purpose computer, a computer network, or any other programmable device. The computer instructions may be stored in a computer readable storage medium, or may be transmitted from one computer readable storage medium to another computer readable storage medium. For example, the computer instructions may be transmitted from one website, computer, server or data center to another website, computer, server or data center in a wired manner (for example, via coaxial cables, fiber optics, or a Digital Subscriber Line (DSL)) or in a wireless manner (for example, via infrared, WiFi or microwave). The computer readable storage medium may be any available medium that are accessible by the computer, or a data storage device such as a server or a data center integrated with one or more available media. The available medium may be a magnetic medium (for example, a floppy disk, a hard disk, and a tape), an optical medium (for example, a Digital Video Disc (DVD)), or a semiconductor medium (for example, a Solid State Disk (SSD)).

Those skilled in the art can clearly understand that, for convenience and conciseness of the description, the specific working process of the system, device, and unit described above may refer to corresponding processes in the above method embodiments, and details thereof will be omitted here.

In several embodiments provided by the present disclosure, it should be understood that, the disclosed system, device and method may be implemented in other ways. For example, the device embodiments described above are merely illustrative. For example, the units are merely divided according to logic functions, and can be divided in other ways in actual implementation. For example, a plurality of units or components may be combined or may be integrated into another system, or some features may be ignored or not executed. In addition, the mutual coupling or direct coupling or communication connection illustrated or discussed may be via some interfaces, or direct coupling or communication connection of devices or units may be in an electrical, mechanical, or other form.

The units described as separate parts may or may not be physically separated. Parts displayed as units may or may not be physical units, i.e., the parts may be located in one place, or may be distributed on a plurality of network units. Some or all of the units can be selected according to actual needs to achieve purposes of solutions of the embodiments.

In addition, respective functional units in respective embodiments of the present disclosure may be integrated in one processing unit, or the respective units may be separate physical existence, or two or more units may be integrated in one unit. The above integrated units can be implemented in a form of hardware, or in a form of a functional software unit.

If the integrated units are realized in a form of functional software units and are sold or used as separate products, they can be stored in a computer-readable storage medium. Based on this understanding, the parts of the technical solutions or the essential parts of the technical solutions (i.e. the parts making a contribution to the related art) can be embodied in form of software product, which is stored in a storage medium, and includes several instruction used for causing a computer device (for example, a personal computer, a server or a network device) to execute all or part of steps in the methods described in respective embodiments of the present disclosure. The above storage medium may be any medium capable of storing program codes, including a USB flash disk, a mobile hard disk, a Read-Only Memory (ROM), a Random Access Memory (RAM), a disc, or a light disk.

As mentioned above, the above embodiments are only used to illustrate, rather than to limit, the technical solution of the present disclosure. Although the present disclosure has been described in detail with reference to the above embodiments, those skilled in the art should understand that they can still modify the technical solutions described in the above embodiments, or equivalently replace some of the technical features of the technical solutions described in the above embodiments. However, these modifications or replacements do not cause the essence of corresponding technical solutions to deviate from the spirit and scope of the technical solutions of the embodiments of the present disclosure.

**Claims**

1.  A path planning method, comprising:

    obtaining a starting point pose and a target pose;
    determining a distance between the starting point pose and the target pose;
    moving, in response to the distance being greater than a first predetermined threshold, the target pose towards the starting point pose with a first turning radius to obtain a first current pose, wherein the first turning radius is greater than or equal to a minimum turning radius of a vehicle; and
    connecting the first current pose and the starting point pose by using a target connection method, and obtaining a first planned path in response to the connecting being successful, wherein the target connection method comprises at least one of a straight line connection method and an arc connection method, and the first planned path comprises a path between the starting point pose and the first current pose and a path between the first current pose and the target pose.

2.  The method according to claim 1, further comprising:
    connecting, in response to the distance being smaller than or equal to the first predetermined threshold, the starting point pose and the target pose by using the target connection method, and obtaining a second planned path in response to the connecting being successful.

3.  The method according to claim 2, further comprising, in response to said connecting the starting point pose and the target pose by using the target connection method being failed:

    moving the starting point pose towards the target pose in a straight line for a predetermined length to obtain a second current pose; and
    connecting the second current pose and the target pose by using the target connection method, and determining a third planned path in response to the connecting being successful, wherein the third planned path comprises a path between the starting point pose and the second current pose and a path between the second current pose and the target pose.

4.  The method according to claim 2 or 3, further comprising, in response to said connecting the starting point pose and the target pose by using the target connection method being failed, or in response to said connecting the second current pose and the target pose by using the target connection method being failed:

    moving the starting point pose towards the target pose with a second turning radius to obtain a third current pose, wherein the second turning radius is greater than or equal to the minimum turning radius of the vehicle, and the third current pose is parallel to the target pose;
    calculating a tracking error between the third current pose and the target pose; and
    connecting, in response to the tracking error being smaller than a second predetermined threshold, the third current pose and the target pose by using a straight line to determine a fourth planned path, wherein the fourth planned path comprises a path between the starting point pose and the third current pose and a path between the third current pose and the target pose.

5. A path planning system, comprising:

an obtaining module configured to obtain a starting point pose and a target pose; and
a processing module configured to:

determine a distance between the starting point pose and the target pose;
move, in response to the distance being greater than a first predetermined threshold, the target pose towards the starting point pose with a first turning radius to obtain a first current pose, wherein the first turning radius is greater than or equal to a minimum turning radius of a vehicle; and
connect the first current pose and the starting point pose by using a target connection method, and obtain a first planned path in response to the connecting being successful, wherein the target connection method comprises at least one of a straight line connection method and an arc connection method, and the first planned path comprises a path between the starting point pose and the first current pose and a path between the first current pose and the target pose.

6. The path planning system according to claim 5, wherein,
the processing module is further configured to connect, in response to the distance being smaller than or equal to the first predetermined threshold, the starting point pose and the target pose by using the target connection method, and obtain a second planned path in response to the connecting being successful.

7. The path planning system according to claim 6, wherein,
the processing module is further configured to: move the starting point pose towards the target pose in a straight line for a predetermined length to obtain a second current pose; connect the second current pose and the target pose by using the target connection method; and determine a third planned path in response to the connecting being successful, wherein the third planned path comprises a path between the starting point pose and the second current pose and a path between the second current pose and the target pose.

8. The path planning system according to claim 6 or 7, wherein,
the processing module is further configured to: move the starting point pose towards the target pose with a second turning radius to obtain a third current pose, wherein the second turning radius is greater than or equal to the minimum turning radius of the vehicle, and the third current pose is parallel to the target pose; calculate a tracking error between the third current pose and the target pose; and connect, in response to the tracking error being smaller than a second predetermined threshold, the third current pose and the target pose by using a straight line to determine a fourth planned path, wherein the fourth planned path comprises a path between the starting point pose and the third current pose and a path between the third current pose and the target pose.

9. A vehicle, comprising the path planning system according to any one of claims 5 to 8.

10. A computer-readable storage medium having a computer program stored thereon, wherein the computer program, when executed by a processor, performs the path planning method according to any one of claims 1 to 4.

FIG. 1A

FIG. 1B

FIG. 1C

FIG. 1D

FIG. 1E

Obtaining a starting point pose and a target pose — 201

Determining a distance between the starting point pose and the target pose — 202

203 — Moving, in response to the distance being greater than a first predetermined threshold, the target pose towards the starting point pose with a first turning radius to obtain a first current pose

Connecting, in response to the distance being smaller than or equal to the first predetermined threshold, the starting point pose and the target pose by using the target connection method, and obtaining a second planned path in response to the connecting being successful — 205

204 — Connecting the first current pose and the starting point pose by using a target connection method, and obtaining a first planned path in response to the connecting being successful

In response to the connecting being failed, moving the starting point pose towards the target pose in a straight line for a predetermined length to obtain a second current pose — 206

Connecting the second current pose and the target pose by using the target connection method, and determining a third planned path in response to the connecting being successful — 207

In response to the connecting being failed, moving the starting point pose towards the target pose with a second turning radius to obtain a third current pose — 208

Calculating a tracking error between the third current pose and the target pose — 209

Connecting, in response to the tracking error being smaller than a second predetermined threshold, the third current pose and the target pose by using a straight line to determine a fourth planned path — 210

FIG. 2

FIG. 3A

FIG. 3B

FIG. 3C

FIG. 4

FIG. 5

## INTERNATIONAL SEARCH REPORT

| | International application No. |
|---|---|
| | **PCT/CN2019/126414** |

### A.   CLASSIFICATION OF SUBJECT MATTER

G01C 21/34(2006.01)i;  G01C 21/00(2006.01)i

According to International Patent Classification (IPC) or to both national classification and IPC

### B.   FIELDS SEARCHED

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

CNPAT, EPODOC, WPI, CNKI: 广东小鹏汽车科技, 陈盛军, 赖健明, 许匡正, 苏镜仁, 晏芳, 路径规划, 路线规划, 起点, 目标, 位姿, 半径, 圆弧, 弧线, 直线, 切线, 阈值, 距离, 误差, 平行; path, route, plan+, start, target, position, radius, arc, line, tangent, threshold, distance, parallel

### C.   DOCUMENTS CONSIDERED TO BE RELEVANT

| Category* | Citation of document, with indication, where appropriate, of the relevant passages | Relevant to claim No. |
|---|---|---|
| PX | CN 110440823 A (GUANGZHOU XIAOPENG MOTORS TECHNOLOGY CO., LTD.) 12 November 2019 (2019-11-12)<br>   claims 1-10 | 1-10 |
| PX | CN 110440824 A (GUANGZHOU XIAOPENG MOTORS TECHNOLOGY CO., LTD.) 12 November 2019 (2019-11-12)<br>   description, paragraphs [0095]-[0227], and figures 1-10 | 1-10 |
| X | CN 107672585 A (GUANGZHOU XIAOPENG MOTORS TECHNOLOGY CO., LTD.) 09 February 2018 (2018-02-09)<br>   description, paragraphs [0052]-[0141], and figures 1-4 | 1-10 |
| A | CN 109927717 A (HUBEI ECARX TECHNOLOGY CO., LTD.) 25 June 2019 (2019-06-25)<br>   entire document | 1-10 |
| A | CN 108534777 A (JIANGSU UNIVERSITY) 14 September 2018 (2018-09-14)<br>   entire document | 1-10 |
| A | US 2012221237 A1 (DONGGUK UNIVERSITY INDUSTRY-ACADEMIC COOPERATION FOUNDATION) 30 August 2012 (2012-08-30)<br>   entire document | 1-10 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **30 April 2020** | **27 May 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
|---|
| **PCT/CN2019/126414** |

| Patent document cited in search report | | | Publication date (day/month/year) | Patent family member(s) | | | Publication date (day/month/year) |
|---|---|---|---|---|---|---|---|
| CN | 110440823 | A | 12 November 2019 | None | | | |
| CN | 110440824 | A | 12 November 2019 | None | | | |
| CN | 107672585 | A | 09 February 2018 | CN | 107672585 | B | 17 September 2019 |
| CN | 109927717 | A | 25 June 2019 | None | | | |
| CN | 108534777 | A | 14 September 2018 | None | | | |
| US | 2012221237 | A1 | 30 August 2012 | KR | 101203897 | B1 | 23 November 2012 |
| | | | | US | 9116523 | B2 | 25 August 2015 |
| | | | | KR | 20120097871 | A | 05 September 2012 |

Form PCT/ISA/210 (patent family annex) (January 2015)